# EUROPEAN PATENT SPECIFICATION

(11) **EP 4 434 774 B1**
(45) Date of publication and mention of the grant of the patent: **04.02.2026**
(21) Application number: 24159362.3
(22) Date of filing: 23.02.2024
(51) Int. Cl.: B60C 15/06, B60C 1/00

(54) **PNEUMATIC TIRE**
LUFTREIFEN
PNEUMATIQUE

(30) Priority: 20.03.2023 JP 2023044371
(43) Date of publication of application: 25.09.2024
(73) Proprietor: Sumitomo Rubber Industries, Ltd., Kobe-shi, Hyogo 651-0072 (JP)
(72) Inventor: KOTA, Matsuura, Kobe-shi, Hyogo, 651-0072 (JP)
(74) Representative: Manitz Finsterwald Patent- und Rechtsanwaltspartnerschaft mbB

(56) References cited:
- EP-B1- 3 299 186
- JP-A- 2001 206 027
- JP-A- 2005 199 811

## Description

### RELATED APLICATION

### FIELD OF THE INVENTION

The present invention relates to a pneumatic tire.

### BACKGROUND OF THE INVENITON

Japanese Unexamined Patent Application Publication No. 2017-074834 describes a pneumatic tire with insulations located between the carcass and inner liner. The insulations each have an insulation bottom portion located radially between a core and a bottom surface of a chafer. Other pneumatic tires are described in EP 3 299 186 A1, JP 2001 206027 A and JP 2005 199811 A1.

### SUMMARY OF THE INVENTION

In recent years, there has been a demand for improving cornering performance, which is running stability during cornering. In order to improve the cornering performance, it is important to increase a rim tightening force, which is the fitting pressure between bead portions and a rim, for example. In particular, in motorcycle tires used for motorcycles which are tilted during cornering, it is particularly important to increase the rim tightening force. However, increasing the rim tightening force causes increased vibration and the like when riding over gaps in the road surface.

The present invention was made in view of the above, and a primary object thereof is to provide a pneumatic tire capable of improving the cornering performance while maintaining vibration absorbing performance.

According to the independent claim, the present invention is a pneumatic tire including:
a pair of bead portions each provided with a bead core; and
a reinforcing filler made of a rubber composition and arranged along the bead core of one or each of the bead portions,
wherein, in the one or each of the bead portions, the reinforcing filler including:
   an inner portion extending in the tire radial direction on the axially inner side of the bead core;
   an outer portion extending in the tire radial direction on the axially outer side of the bead core; and
   a middle portion extending in the tire axial direction on the radially inner side of the bead core so as to connect the inner portion and the outer portion,
   wherein the outer portion has an outer end in the tire radial direction located radially inside an outer end in the tire radial direction of the inner portion and located radially outside a center position in the tire radial direction of a section height of the bead core of the one or each of the bead portions.

In a standard state, the pneumatic tire is mounted on a standard rim, inflated to a standard inner pressure, and loaded with no tire load, and
the outer end of the outer portion is located radially inside an outer end in the tire radial direction of a rim flange of the standard rim in a tire meridian section of the pneumatic tire in the standard state.

By adopting the above configuration, the pneumatic tire of the present invention can improve the cornering performance while maintaining the vibration absorbing performance.

### BRIEF DESCRIPTION OF THE DRAWINGS

FIG. 1 is a tire meridian section of the pneumatic tire according to an embodiment of the present invention.
FIG. 2 is an enlarged partial view of the tire 1 of FIG. 1.
FIG. 3 is an enlarged partial view of the tire 1 of FIG. 1.

### DETAILED DESCRIPTION OF THE INVENTION

An embodiment of the present invention will now be described in conjunction with accompanying drawings.

The drawings contain exaggerated representations and representations that differ from the actual dimensional ratios of the structure in order to aid in the understanding of the present invention. Further, in cases where there are multiple embodiments, the identical or common elements are denoted by the same reference numerals throughout the specification, and redundant explanations will be omitted.

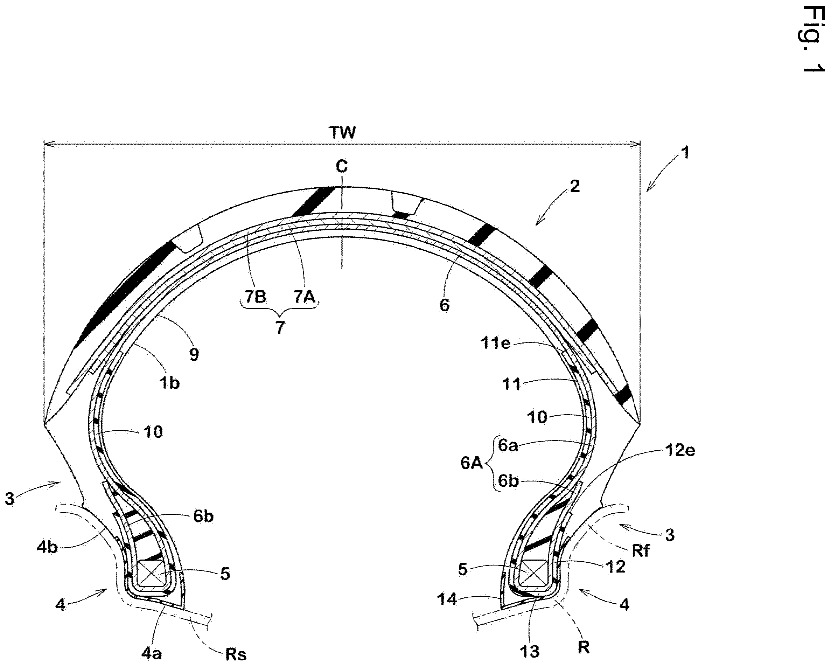

FIG. 1 is a tire meridian section of a pneumatic tire 1 according to an embodiment of the present invention (hereinafter, may be simply referred to as "tire 1") in a standard state. The tire meridian section is a cross section passing all through the tire rotational axis (not shown) of the tire 1. FIG. 1 shows the tire 1 for motorcycles (motor cycle tire) as a preferred embodiment. The tire 1 has a tread width TW, which is an axial distance between tread edges (i.e., a distance between the axially outermost ground contacting positions of the ground contacting surface of a tread portion 2 described below) and the maximum width of the tire. However, the present invention may be employed in tires for passenger cars or for heavy duty tires, for example.

In the present specification, unless otherwise noted, the dimensions and the like of various parts of the tire 1 are measured under the standard state. The term "standard state" refers to a state in which the tire 1 is assembled on a standard rim (R), inflated to a standard inner pressure, and loaded with no tire load.

The "standard rim (R)" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

The tire 1 in the present embodiment includes a pair of bead portions 4. Each of the bead portions 4 includes a bead bottom surface (4a) and a bead outer side surface (4b). The bead bottom surface (4a) is the outer surface of each of the bead portions 4 facing inward in the tire radial direction, and contacts a rim seat (Rs) of the standard rim (R) (hereinafter, may be simply referred to as "rim (R)"). Generally, the bead bottom surface (4a) has a tapered angle that slopes inward in the tire radial direction toward the inner side in the tire axial direction. The bead outer side surface (4b) is the outer surface of each of the bead portions 4 facing outward in the tire axial direction and contacts a rim flange (Rf) of the rim (R).

Each of the bead portions 4 is provided with a bead core 5. Further, the tire 1 includes a pair of sidewall portions 3 each disposed radially outside a respective one of the bead portions 4, and the tread portion 2 that connects the sidewall portions 3, for example.

At least one of the bead portions 4 is provided with a reinforcing filler 10 made of a rubber composition and arranged along the bead core 5 of the at least one of the bead portions 4. In the present embodiment, the reinforcing filler 10 is disposed in each of the bead portions 4.

The reinforcing filler 10 includes an inner portion 11, an outer portion 12, and a middle portion 13. The inner portion 11 has a part located axially inside the bead core 5 and extends therefrom in the tire radial direction on the axially inner side of the bead core 5. The outer portion 12 extends in the tire radial direction on the axially outer side of the bead core 5. The middle portion 13 extends in the tire axial direction on the radially inner side of the bead core 5 so as to connect the inner portion 11 and the outer portion 12, more specifically, so as to connect the radially inner end of the inner portion 11 and the radially inner end of the outer portion 12. The middle portion 13 configured as such increases the rubber volume on the radially inner side of the bead core 5, therefore, the rim tightening force is increased, thereby, the cornering performance is improved.

The outer portion 12 has an outer end (12e) in the tire radial direction located radially inside an outer end (11e) in the tire radial direction of the inner portion 11. The outer portion 12 configured as such suppresses an excessive increase in the rigidity of the tire, therefore, the vibration during running is suppressed, thereby, the vibration absorbing performance is maintained high. Further, the region where the inner portion 11 is located is a region where a large amount of deflection occurs during running since the region where the inner portion 11 is located is further away from the rim flange (Rf) than the region where the outer portion 12 is located. Therefore, by arranging the inner portion 11, which has the outer end (11e) located radially outside the outer end (12e) of the outer portion 12, in the area where the inner portion 11 should be arranged, the deflection of the tire during running can be effectively suppressed, thereby, the cornering performance can be further improved.

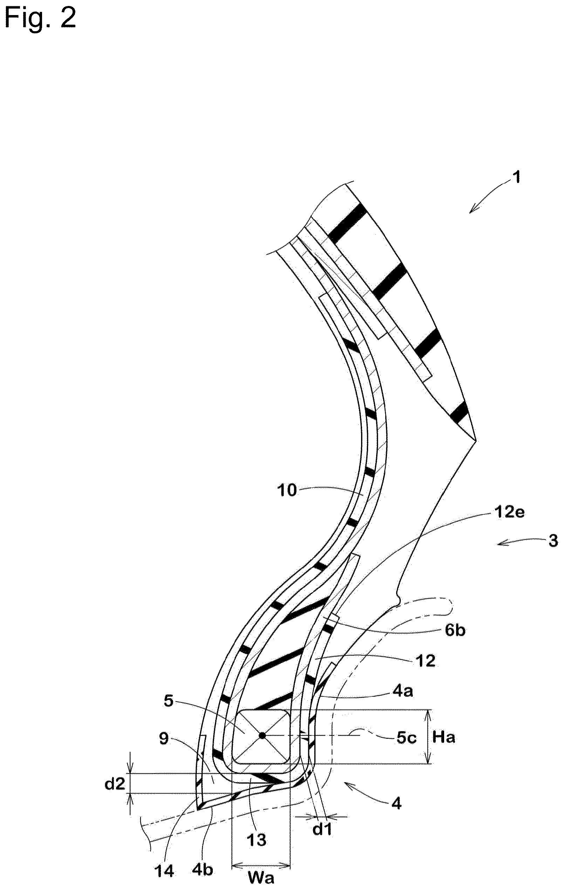

FIG. 2 is an enlarged partial view of the tire 1 of FIG. 1. As shown in FIG. 2, the outer end (12e) of the outer portion 12 is located radially outside a center position (5c) in the tire radial direction of a section height (Ha) of the bead core 5. The outer portion 12 configured as such positions the bead core 5 on the axially inner side, i.e., the bead core 5 is shifted more toward axially inner side, therefore, a larger rubber volume is secured in the radially inner part of the bead core 5, thereby, the cornering performance is further improved. As a result, the tire 1 of the present embodiment can improve the cornering performance while maintaining the vibration absorbing performance.

The reinforcing filler 10 configured as such is formed from the following rubber composition. The rubber composition has a loss tangent tanδ at 70 degrees Celsius of preferably 0.06 or more, more preferably 0.2 or more, and preferably 1.5 or less, more preferably 1.0 or less. Since the loss tangent tanδ is 0.06 or more, a vibration absorbing effect can be maintained high. Since the loss tangent tan δ is 1.5 or less, a decrease in the rigidity due to heat generation can be suppressed, therefore, the cornering performance can be improved. Further, the rubber composition has a rubber hardness at 23 degrees Celsius of preferably 65 degrees or more, more preferably 70 degrees or more, and preferably 85 degrees or less, more preferably 80 degrees or less. Since the rubber hardness is 65 degrees or more, the rigidity of the tire 1 is ensured and the cornering performance can be improved. Since the rubber hardness is 85 degrees or less, the vibration absorbing effect can be maintained high. Furthermore, the rubber composition has an elongation at break at 23 degrees Celsius of preferably 200% or more, and more preferably 350% or more. Since the elongation at break is 200% or more, the deformation of the sidewall portions 3 and the bead portions 4 can be suppressed, thereby, the cornering performance can be improved. If the elongation at break is excessively large, the vibration absorbing performance may be deteriorated. Therefore, it is preferred that the elongation at break is 550% or less and more preferably 500% or less. The reinforcing filler 10 in the present embodiment does not contain any cord.

In the present specification, the "loss tangent tanδ" is measured in accordance with Japanese Industrial Standards JIS-K6394 under the following conditions by using a dynamic viscoelasticity measurement device (EPLEXOR series) manufactured by GABO QUALIMETER Testanlagen GmbH.
Initial strain: 10%
Amplitude: ±1%
Frequency: 10Hz
Deformation mode: tension
Measurement temperature: 70 degrees Celsius

Further, in the present specification, the "rubber hardness" refers to hardness measured by using a type-A durometer in accordance with Japanese Industrial Standards JIS-K6253 at a standard temperature of 23 degrees Celsius ± 2 degrees Celsius.

Furthermore, in the present specification, the "elongation at break" can be measured in accordance with Japanese Industrial Standards JIS K6251 in the section "Rubber, vulcanized or thermoplastic -- Determination of tensile stress-strain properties", for example.

As shown in FIG. 1, the tire 1 in the present embodiment includes a carcass 6 extending between the bead portions 4. The carcass 6 is formed of at least one, in the present embodiment, one carcass ply 6A, for example. The carcass ply 6A includes, for example, a main body portion (6a) extending between the bead cores 5 of the bead portions 4, and turned up portions (6b) each turned up around a respective one of the bead cores 5 from the inside to the outside in the tire axial direction to extend further in the tire radial direction.

Further, the tire 1 includes a belt layer 7 disposed radially outside the carcass 6 and in the tread portion 2. The belt layer 7 includes at least one belt ply, in the present embodiment two belt plies 7A and 7B. The belt ply 7A (radially inner belt ply), which is arranged radially inside the belt ply 7B (radially outer belt ply), is adjacent to (in contact with in the present embodiment) the carcass 6 on the outside in the tire radial direction, for example. The belt ply 7B is adjacent to (in contact with in the present embodiment) the inner belt ply 7A on the outside in the tire radial direction so as to be overlaid with each other in the tire radial direction in the present embodiment, and has a larger width in the tire axial direction than the inner belt ply 7A. The two belt plies 7A and 7B and the carcass ply 6A in the present embodiment are made of well-known constituent materials including cords and topping rubber.

Further, the tire 1 in the present embodiment includes an inner liner 9 and a chafer 14. The inner liner 9 constitutes an inner cavity surface (1b) of the tire 1, for example. The inner liner 9 has excellent air shielding properties. The inner liner 9 holds the internal pressure of the tire 1. The chafer 14 in the present embodiment contacts the rim seat (Rs) and the rim flange (Rf) of the rim (R). The chafer 14 is made of a well-known rubber material with excellent wear resistance and is harder than the inner liner 9 and the reinforcing filler 10. The inner liner 9 and the chafer 14 are each formed from well-known rubber materials.

As shown in FIG. 2, in each of the bead portions 4 in the present embodiment, the turned up portion (6b), the outer portion 12, and the chafer 14 are disposed axially outside the bead core 5 over the section height (Ha) in the tire radial direction of the bead core 5. Further, in the present embodiment, the turned up portions (6b), the middle portion 13, the inner liner 9, and the chafer 14 are disposed radially inside the bead core 5 over a cross sectional width (Wa) in the tire axial direction of the bead core 5.

Each of the bead portions 4 has a tire thickness (d1) (first tire thickness) between the outer surface (bead outer side surface (4b)) of the bead portion 4 and the turned up portion (6b) in the section height (Ha) (i.e., in the radial range corresponding to the section height (Ha) or in the radial range from the radially innermost end to the radially outermost end of the bead core 5). The tire thickness (d1) is preferably 1.5 mm or more. more preferably 2.0 mm or more, and preferably 4.0 mm or less, and more preferably 3.5 mm or less. Since the tire thickness (d1) is 1.5 mm or more, the bead core 5 can be positioned more toward axially inner side, therefore, the effect of increasing the rubber volume of the radially inner part of the bead core 5 can be exerted. In addition, damage to the bead portions 4 due to contact between the turned up portions (6b) and the rim flange (Rf) can be suppressed, thereby, the cornering performance can be improved. Since the tire thickness (d1) is 4.0 mm or less, the rim tightening force can be maintained high.

Each of the bead portions 4 has a tire thickness (d2) (second tire thickness) between the turned up portion (6b) and the outer surface (bead bottom surface (4a)) of the bead portion 4 in the cross sectional width (Wa) in the tire axial direction (i.e., in the axial range corresponding to the cross sectional width (Wa) or in the axial range from the axially innermost end to the axially outermost end of the bead core 5). The tire thickness (d2) is preferably 2.0 mm or more, more preferably 3.0 mm or more, and preferably 8.0 mm or less, more preferably 7.0 mm or less. Since the tire thickness (d2) is 2.0 mm or more, the rim tightening force can be increased. Since the tire thickness (d2) is 8.0 mm or less, excessive increase in the rim tightening force can be suppressed, therefore, rim assembly performance, which is the ease of mounting the tire on the rim (R), can be maintained.

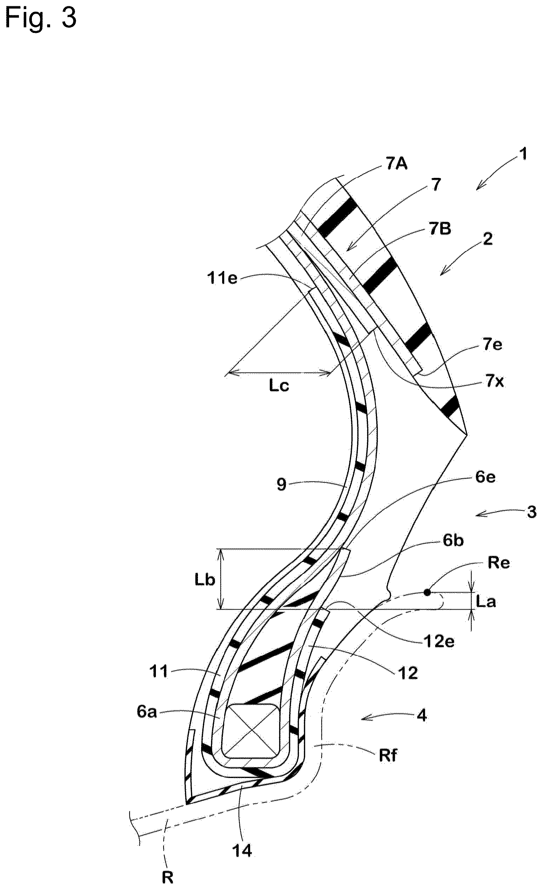

FIG. 3 is an enlarged partial view of the tire 1 of FIG. 1. As shown in FIG. 3, in each of the bead portions 4, the outer portion 12 is disposed axially outside the turned up portion (6b). The outer portion 12 in the present embodiment is disposed between the turned up portion (6b) and the chafer 14. Since the outer portion 12 is axially outside the turned up portion (6b), it is expected to suppress the transmission of vibration from the bead core 5 to the rim (R) when riding over gaps in the road surface.

The outer end (12e) of the outer portion 12 is located radially inside an outer end (Re) in the tire radial direction of the rim flange (Rf). The bead portions 4 which are in contact with the rim flange (Rf) are areas where deformation (including deflection) during running is relatively small. By providing the outer end (12e) radially inside the outer end (Re) of the rim flange (Rf), an excessive increase in the rigidity of the bead portions 4 can be further suppressed, thereby, the vibration absorbing performance can be maintained high. From the point of view of achieving both the vibration absorbing performance and the cornering performance, a separation distance (La) (first separation distance) in the tire radial direction between the outer end (12e) of the outer portion 12 and the outer end (Re) of the rim flange (Rf) is preferably 5 mm or less, and more preferably 3 mm or less, for example. In each of the bead portions 4, the outer end (Re) of the rim flange (Rf) in the present embodiment is located radially inside an outer end (6e) in the tire radial direction of the turned up portion (6b).

In each axial half of the tire 1, the outer end (12e) of the outer portion 12 is located radially inside the outer end (6e) in the tire radial direction of the turned up portion (6b), for example. As a result, the outer end (6e) of the turned up portion (6b) and the outer end (12e) of the outer portion 12 are misaligned in the tire radial direction, therefore, changes in the rigidity of the sidewall portion 3 and the bead portion 4 can be decreased, thereby, the deflection during running can be reduced. In order to achieve both the cornering performance and the vibration absorbing performance, a separation distance (Lb) (second separation distance) in the tire radial direction between the outer end (12e) of the outer portion 12 and the outer end (6e) of the turned up portion (6b) is preferably 2 times or more, more preferably 2.5 times or more the separation distance (La) and preferably 4 times or less, more preferably 3.5 times or less the separation distance (La), for example.

The inner portion 11 is located axially inside the main body portion (6a). The inner portion 11 configured as such performs a compressive deformation during running and applies a tensile force to the above-mentioned cords in the main body portion (6a), which helps to increase the rigidity of the sidewall portions 3 and improve the cornering performance. In addition, the inner portion 11 configured as such acts like a damper against the load during running, thereby, the vibration absorbing performance is improved. The inner portion 11 in the present embodiment is arranged between the main body portion (6a) and the inner liner 9.

The outer end (11e) of the inner portion 11 is located in the tread portion 2 and axially inside an outer end (7e) in the tire axial direction of the belt layer 7, for example. Therefore, the outer end (11e) is separated from the sidewall portions 3, where the deflection during running is relatively large, thereby, the cornering performance can be further improved. The outer end (11e) of the inner portion 11 in the present embodiment is located in the tread portion 2 and axially inside an outer end (7x) in the tire axial direction of the radially inner belt ply 7A, which has a width smaller than a width of the radially outer belt ply 7B. Although not particularly limited, a separation distance (Lc) (third separation distance) in the tire axial direction between the outer end (11e) of the inner portion 11 and the outer end (7x) of the radially inner belt ply 7A is preferably 1% or more, more preferably 5% or more of the tread width TW, and preferably 20% or less, more preferably 15% or less of the tread width TW. 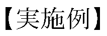

The present invention is defined by the attached claims. While detailed description has been made of an especially preferred embodiment of the present invention, the present invention can be embodied in various forms included in the scope of protection defined by the claims, without being limited to the illustrated embodiment.

### [Examples]

Motorcycle tires of size 110/70R17 having the basic structure shown in FIG. 1 were made by way of test according to the specifications listed in Table 1. Then, each of the test tires was tested for the cornering performance, the vibration absorbing performance, and the rim assembly performance. The test methods were as follows.

The "A" in Table 1 is the configuration shown in FIG. 2.

The "B" is the configuration in which the outer end of the outer portion is located radially inside the center position of the section height of the bead core.

The "C" is the configuration shown in FIG. 2.

The "D" is the configuration in which the outer end of the inner portion is located in the tread portion and axially outside the outer end of the belt layer.

### < Cornering Performance and Vibration Absorbing Performance >

Each of the test tires was mounted on a front wheel of a motorcycle with a displacement of 250 cc under the following conditions. A test rider drove the above-mentioned vehicle on a test course of a dry asphalt road surface. The test rider sensually evaluated each of the test tires on rigid impression, responsiveness, the cornering performance in terms of steering operability, and the vibration absorbing performance in terms of stability when riding over gaps and the like during the drive. The results are indicated by an evaluation point based on Reference 1 being 100, wherein the larger numerical value is better.
Tire rim: 17M/CxMT3.00
Tire inner pressure: 200 kPa

The tire for the rear wheel was common for Examples and Reference 1.

**Table 1**

| | | Ref. 1 | Ex.1 | Ex.2 | Ex.3 | Ex.4 | Ex.5 | Ex.6 | Ex.7 |
|---|---|---|---|---|---|---|---|---|---|
| Position of Outer end of Outer portion | | B | A | A | A | A | A | A | A |
| Position of Outer end of Inner portion | | C | C | D | C | C | C | C | C |
| Tire thickness (d1) [mm] | | 1.5 | 1.5 | 1.5 | 1.5 | 1.5 | 2.5 | 4 | 1.5 |
| Tire thickness (d2) [mm] | | 1.5 | 5 | 5 | 2 | 8 | 5 | 5 | 2.5 |
| Cornering performance | [evaluation point : larger is better] | 100 | 130 | 105 | 130 | 130 | 120 | 110 | 130 |
| Vibration absorbing performance | [evaluation point : larger is better] | 100 | 115 | 115 | 105 | 120 | 115 | 115 | 110 |

As shown in the table, it is understood that the tires in the Examples achieved both the cornering performance and the vibration absorbing performance compared to the tire in the Reference.

### [Description of Reference Signs]

- 1: pneumatic tire
- 5: bead core
- 5c: center position
- 10: reinforcing filler
- 11: inner portion
- 11e: outer end
- 12: outer portion
- 12e: outer end
- 13: middle portion
- Ha: section height

## Claims

1. A pneumatic tire (1) comprising:
a pair of bead portions (4) each provided with a bead core (5); and
a reinforcing filler (10) made of a rubber composition and arranged along the bead core (5) of one or each of the bead portions,
wherein, in the one or each of the bead portions, the reinforcing filler comprising:
an inner portion (11) extending in the tire radial direction on the axially inner side of the bead core (5);
an outer portion (12) extending in the tire radial direction on the axially outer side of the bead core (5); and
a middle portion (13) extending in the tire axial direction on the radially inner side of the bead core (5) so as to connect the inner portion and the outer portion,
wherein the outer portion (12) has an outer end (12e) in the tire radial direction located radially inside an outer end (11e) in the tire radial direction of the inner portion (11) and located radially outside a center position (5c) in the tire radial direction of a section height (Ha) of the bead core (5) of the one or each of the bead portions, **characterized in that**
in a standard state, the pneumatic tire is mounted on a standard rim (R), inflated to a standard inner pressure, and loaded with no tire load, and
the outer end (12e) of the outer portion (12) is located radially inside an outer end (Re) in the tire radial direction of a rim flange (Rf) of the standard rim (R) in a tire meridian section of the pneumatic tire (1) in the standard state.

2. The pneumatic tire (1) according to claim 1 further comprising a carcass (6) extending between the bead portions (4), wherein
the carcass (6) includes a main body portion (6a) extending between the bead cores (5) of the bead portions and turned up portions (6b) each turned up around a respective one of the bead cores from the inside to the outside in the tire axial direction to extend further in the tire radial direction,
in the one or each of the bead portions (4),
the outer portion (12) is located axially outside the turned up portion (6b), and
the inner portion (11) is located axially inside the main body portion (6a).

3. The pneumatic tire (1) according to claim 2, wherein
the one or each of the bead portions (4), in the section height (Ha) thereof, has a first tire thickness (d1) between the axially outer surface (4a) of the bead portion (4) and the turned up portion (6b), and
the first tire thickness (d1) is from 1.5 to 4.0 mm.

4. The pneumatic tire (1) according to claim 2, wherein
the one or each of the bead portions (4) has a cross sectional width in the tire axial direction and a second tire thickness (d2), in the cross sectional width, between the turned up portion (6b) and the axially outer surface (4b) of the one or each of the bead portions (4), and
the second tire thickness (d2) is from 2.0 to 8.0 mm.

5. The pneumatic tire (1) according to claim 2 further comprising a tread portion (2), wherein
the tread portion (2) includes a belt layer (7) arranged radially outside the carcass (6), and
the outer end (11e) of the inner portion (11) is located in the tread portion (2) and axially inside an outer end in the tire axial direction of the belt layer (7).

6. The pneumatic tire (1) according to any one of claims 1 to 5, wherein the reinforcing filler (10) is formed of a rubber composition having a loss tangent tanδ from 0.06 to 1.5 at 70 degrees Celsius, a rubber hardness from 65 to 85 degrees at 23 degrees Celsius, and an elongation at break of 200% or more at 23 degrees Celsius, wherein the "loss tangent tanδ" is measured in accordance with JIS-K6394 and under the conditions specified in the description.

7. The pneumatic tire (1) according to any one of claims 1 to 6, wherein the pneumatic tire (1) is a motorcycle tire having a tread width being the maximum width of the pneumatic tire (1).

## Patentansprüche

1. Luftreifen (1), umfassend:
ein Paar Wulstabschnitte (4), die jeweils mit einem Wulstkern (5) versehen sind; und
einen Verstärkungsfüllstoff (10), der aus einer Kautschukzusammensetzung hergestellt ist und entlang des Wulstkerns (5) von einem oder jedem der Wulstabschnitte angeordnet ist,
wobei in dem einen oder jedem der Wulstabschnitte der Verstärkungsfüllstoff umfasst:
einen inneren Abschnitt (11), der sich in der Reifenradialrichtung auf der axial inneren Seite des Wulstkerns (5) erstreckt;
einen äußeren Abschnitt (12), der sich in der Reifenradialrichtung auf der axial äußeren Seite des Wulstkerns (5) erstreckt; und
einen mittleren Abschnitt (13), der sich in der Reifenaxialrichtung auf der radial inneren Seite des Wulstkerns (5) erstreckt, so dass er den inneren Abschnitt und den äußeren Abschnitt verbindet,
wobei der äußere Abschnitt (12) ein äußeres Ende (12e) in der Reifenradialrichtung aufweist, das sich radial innen von einem äußeren Ende (11e) in der Reifenradialrichtung des inneren Abschnitts (11) befindet und sich radial außen von einer Mittelposition (5c) in der Reifenradialrichtung einer Schnitthöhe (Ha) des Wulstkerns (5) von dem einen oder jedem der Wulstabschnitte befindet,
**dadurch gekennzeichnet, dass**
in einem Standardzustand der Luftreifen auf einer Standardfelge (R) aufgezogen, auf einen Standardinnendruck aufgepumpt und ohne Reifenlast belastet ist, und
das äußere Ende (12e) des äußeren Abschnitts (12) sich radial innen von einem äußeren Ende (Re) in der Reifenradialrichtung eines Felgenhorns (Rf) der Standardfelge (R) in einem Reifenmeridianschnitt des Luftreifens (1) in dem Standardzustand befindet.

2. Luftreifen (1) nach Anspruch 1, ferner umfassend eine Karkasse (6), die sich zwischen den Wulstabschnitten (4) erstreckt, wobei
die Karkasse (6) einen Hauptkörperabschnitt (6a), der sich zwischen den Wulstkernen (5) der Wulstabschnitte erstreckt, und Umschlagabschnitte (6b) umfasst, die jeweils um einen jeweiligen der Wulstkerne von der Innenseite zu der Außenseite in der Reifenaxialrichtung umgeschlagen sind, so dass sie sich weiter in der Reifenradialrichtung erstrecken,
in dem einen oder jedem der Wulstabschnitte (4)
der äußere Abschnitt (12) sich axial außen von dem Umschlagabschnitt (6b) befindet, und
der innere Abschnitt (11) sich axial innen von dem Hauptkörperabschnitt (6a) befindet.

3. Luftreifen (1) nach Anspruch 2, wobei
der eine oder jeder der Wulstabschnitte (4) in seiner Schnitthöhe (Ha) eine erste Reifendicke (d1) zwischen der axial äußeren Oberfläche (4a) des Wulstabschnitts (4) und dem Umschlagabschnitt (6b) aufweist, und
die erste Reifendicke (d1) von 1,5 bis 4,0 mm beträgt.

4. Luftreifen (1) nach Anspruch 2, wobei
der eine oder jeder der Wulstabschnitte (4) eine Querschnittsbreite in der Reifenaxialrichtung und eine zweite Reifendicke (d2) in der Querschnittsbreite zwischen dem Umschlagabschnitt (6b) und der axial äußeren Oberfläche (4b) von dem einen oder jedem der Wulstabschnitte (4) aufweist, und
die zweite Reifendicke (d2) von 2,0 bis 8,0 mm beträgt.

5. Luftreifen (1) nach Anspruch 2, ferner umfassend einen Laufflächenabschnitt (2), wobei
der Laufflächenabschnitt (2) eine Gürtelschicht (7) umfasst, die radial außen von der Karkasse (6) angeordnet ist, und
das äußere Ende (11e) des inneren Abschnitts (11) sich in dem Laufflächenabschnitt (2) und axial innen von einem äußeren Ende in der Reifenaxialrichtung der Gürtelschicht (7) befindet.

6. Luftreifen (1) nach einem der Ansprüche 1 bis 5, wobei der Verstärkungsfüllstoff (10) aus einer Gummizusammensetzung gebildet ist, die einen Verlusttangens tanδ von 0,06 bis 1,5 bei 70 Grad Celsius, eine Gummihärte von 65 bis 85 Grad bei 23 Grad Celsius und eine Bruchdehnung von 200 % oder mehr bei 23 Grad Celsius aufweist, wobei der "Verlusttangens tanδ" gemäß JIS-K6394 und unter den in der Beschreibung angegebenen Bedingungen gemessen ist.

7. Luftreifen (1) nach einem der Ansprüche 1 bis 6, wobei der Luftreifen (1) ein Motorradreifen ist, der eine Laufflächenbreite aufweist, die die maximale Breite des Luftreifens (1) ist.

## Revendications

1. Bandage pneumatique (1) comprenant :
une paire de portions de talon (4) dotées chacune d'une âme de talon (5) ; et
un agent de charge de renforcement (10) fait d'une composition de caoutchouc et agencé le long de l'âme de talon (5) de l'une ou de chacune des portions de talon,
dans lequel, dans l'une ou chacune des portions de talon, l'agent de charge de renforcement comprend :
une portion intérieure (11) s'étendant dans la direction radiale du pneumatique sur le côté axialement intérieur de l'âme de talon (5) ;
une portion extérieure (12) s'étendant dans la direction radiale du pneumatique sur le côté axialement extérieur de l'âme de talon (5) ; et
une portion médiane (13) s'étendant dans la direction axiale du pneumatique sur le côté radialement intérieur de l'âme de talon (5) de manière à connecter la portion intérieure et la portion extérieure,
dans lequel la portion extérieure (12) a une extrémité extérieure (12e) dans la direction radiale du pneumatique située radialement à l'intérieur d'une extrémité extérieure (11e) dans la direction radiale du pneumatique de la portion intérieure (11) et située radialement à l'extérieur d'une position centrale (5c) dans la direction radiale du pneumatique d'une hauteur de section (Ha) de l'âme de talon (5) de l'une ou de chacune des portions de talon,
**caractérisé en ce que**
dans un état standard, le bandage pneumatique est monté sur une jante standard (R), est gonflé à une pression interne standard, et n'est chargé d'aucune charge de pneumatique, et
l'extrémité extérieure (12e) de la portion extérieure (12) est située radialement à l'intérieur d'une extrémité extérieure (Re) dans la direction radiale du pneumatique d'une bride de jante (Rf) de la jante standard (R) dans une section méridienne de pneumatique du bandage pneumatique (1) dans l'état standard.

2. Bandage pneumatique (1) selon la revendication 1, comprenant en outre une carcasse (6) s'étendant entre les portions de talon (4), dans lequel
la carcasse (6) inclut une portion formant corps principal (6a) s'étendant entre les âmes de talon (5) des portions de talon, et des portions retroussées (6b), chacune étant retroussée autour d'une âme respective des âmes de talon depuis l'intérieur jusqu'à l'extérieur dans la direction axiale du pneumatique pour s'étendre plus loin dans la direction radiale du pneumatique,
dans l'une ou chacune des portions de talon (4),
la portion extérieure (12) est située axialement à l'extérieur de la portion retroussée (6b), et
la portion intérieure (11) est située axialement à l'intérieur de la portion formant corps principal (6a).

3. Bandage pneumatique (1) selon la revendication 2, dans lequel
l'une ou chacune des portions de talon (4), dans la hauteur de section (Ha) de celle-ci, a une première épaisseur de pneumatique (d1) entre la surface axialement extérieure (4a) de la portion de talon (4) et la portion retroussée (6b), et
la première épaisseur de pneumatique (d1) est de 1,5 à 4,0 mm.

4. Bandage pneumatique (1) selon la revendication 2, dans lequel
l'une ou chacune des portions de talon (4) a une largeur de section transversale dans la direction axiale du pneumatique et une seconde épaisseur de pneumatique (d2), dans la largeur de section transversale, entre la portion retroussée (6b) et la surface axialement extérieure (4b) de l'une ou de chacune des portions de talon (4), et
la seconde épaisseur de pneumatique (d2) est de 2,0 à 8,0 mm.

5. Bandage pneumatique (1) selon la revendication 2, comprenant en outre une portion formant bande de roulement (2), dans lequel
la portion formant bande de roulement (2) inclut une couche de ceinture (7) agencée radialement à l'extérieur de la carcasse (6), et
l'extrémité extérieure (11e) de la portion intérieure (11) est située dans la portion formant bande de roulement (2) et axialement à l'intérieur d'une extrémité extérieure dans la direction axiale du pneumatique de la couche de ceinture (7).

6. Bandage pneumatique (1) selon l'une quelconque des revendications 1 à 5, dans lequel l'agent de charge de renforcement (10) est formé d'une composition de caoutchouc ayant une tangente de perte tanδ allant de 0,06 à 1,5 à 70 degrés Celsius, une dureté de caoutchouc allant de 65 à 85 degrés à 23 degrés Celsius, et un allongement à la rupture de 200 % ou plus à 23 degrés Celsius, dans lequel la « tangente de perte tanδ » est mesurée selon la norme industrielle japonaise JIS-K6394 et dans les conditions spécifiées dans la description.

7. Bandage pneumatique (1) selon l'une quelconque des revendications 1 à 6, dans lequel le bandage pneumatique (1) est un pneumatique pour motocyclette ayant une largeur de bande de roulement qui est la largeur maximum du bandage pneumatique (1).
